# EUROPEAN PATENT APPLICATION

(11) **EP 4 800 555 A1**
(43) Date of publication of application: **02.09.2026**
(21) Application number: 25315070.0
(22) Date of filing: 28.02.2025
(51) Int. Cl.: G06F 9/50, G06F 9/54

(54) **SYSTEM AND METHOD FOR INFRASTRUCTURE CONSUMPTION**

(71) Applicant: OVH, 59100 Roubaix (FR)
(72) Inventor: FICHEL, Benjamin, 59100 Roubaix (FR); GUERIN, Benjamin Andre Jean, 29870 Lannilis (FR); COTTEREAU, Gaetan, 29860 Kersaint-Plabennec (FR); FABREGA, Felix, 06100 Nice (FR); GLEIZES, Stéphane, 07190 Saint-Pierreville (FR); LARCHER, Hugo, 33000 Bordeaux (FR)
(74) Representative: BCF Global

(57) **Abstract**

The technology relates to a computer system (100, 400) designed to manage components of a physical infrastructure in response to user requests. The system comprises several modules configured to receive user requests, then executing these requests. The system comprise for example a computing resource manager module (120) for managing computing resources. An inventory manager module (130) oversees the inventory of computing resources, ensuring efficient management and synchronization. This architecture enables dynamic configuration and management of physical infrastructure components, enhancing operational efficiency and user control.

## Description

### Introduction

The present technology relates to infrastructure management, particularly to methods and systems for orchestrating and manipulating physical infrastructure components.

### Background

Prior art solutions in the domain of physical infrastructure management typically rely on rigid, monolithic architectures that expose limited functionality through specific application programming interfaces (API)s. These systems often require users to interact directly with hardware components, such as bare metal servers, through predefined interfaces. For instance, traditional Bare Metal APIs provide a set of operations for managing physical servers, including provisioning, rebooting, and monitoring. However, these APIs do not abstract the underlying complexities of the physical infrastructure, leading to a steep learning curve for users and limiting their ability to customize or optimize resource consumption effectively.

Another prevalent approach involves the use of legacy systems that operate in isolation, lacking integration with modern cloud-native architectures. These systems often utilize a siloed methodology, where each component, such as networking or storage, is managed independently. This fragmentation results in inefficiencies, as users must navigate multiple interfaces and workflows to achieve their objectives. Furthermore, the lack of a unified control plane means that users cannot easily orchestrate complex operations that span multiple infrastructure components, leading to increased operational overhead and potential errors during resource allocation.

Additionally, existing solutions often fail to provide a user-friendly experience, as they do not cater to varying levels of expertise among users. Many systems require deep technical knowledge to manage physical resources effectively, which can deter less experienced users from leveraging the full capabilities of the infrastructure. This limitation is exacerbated by the absence of agnostic and abstract primitives that could simplify interactions with the infrastructure. As a result, users are left with cumbersome processes that do not align with the dynamic needs of modern applications, ultimately hindering the agility and scalability that contemporary cloud environments demand.

In light of these limitations, it is, therefore, an objective of the present technology to partially overcome the aforementioned challenges by proposing a novel approach that addresses the inefficiencies and impracticalities associated with the prior art solutions.

### Summary

The present technology has been designed to overcome at least some drawbacks described in the preceding section.

According to an aspect, the present technology relates to a computer-implemented system configured to manage a component of a physical infrastructure, the physical infrastructure comprising a plurality of components, the plurality of components comprising a computing resource, a network, a storage device, the system comprising at least:
1. an orchestrator module configured to:
   a. receive a request from the user, the request comprising a descriptive model of a final state of the physical infrastructure;
   b. generate, based on the request, a set of sub-requests associated with instructions to configure a set of components of the physical infrastructure to put the physical infrastructure into the final state;
   c. execute the sub-requests of the set of sub-requests based on a predetermined order determined based on the descriptive model;
2. a computing resource manager module configured to:
   a. receive at least one sub-request of the set of sub-requests;
   b. manage a computing resource of the physical infrastructure, the computing resource being listed into a list of computing resources, the list of computing resources being accessible from a data synchronization sub-module;
   c. send a booting script for a given computing resource to a booting script manager sub-module, the booting script being configured to allow the given computing resource to boot through the network;
3. an inventory manager module configured to:
   a. receive at least one sub-request of the set of sub-requests to check an inventory of computing resources, the inventory comprising data about a plurality of computing resources;
   b. send data to the orchestrator module according to at least one sub-request of the set of sub-requests;
   c. manage the inventory of computing resources;
   d. send data to the computing resource manager module to execute a command;
4. a network service manager module configured to :
   a. receive at least one sub-request of the set of sub-requests; and
   b. manage a network resource of the physical infrastructure.

According to another aspect, the present technology relates to a computer-implemented method for managing a component of a physical infrastructure based on a user's request, the physical infrastructure comprising a plurality of components, the plurality of components comprising a computing device, a network, a storage device, the method comprising:
1. receiving a request from the user to create a virtual network interface card, wherein the virtual network interface card is defined as an object describing connectivity on a dedicated computing resource;
2. creating the virtual network interface card;
3. receiving a request from the user to create a network object, wherein the network object completes the modeling of a computing resource's connectivity, enabling the attachment of the virtual network interface card to a virtual rack;
4. creating the requested network object;
5. selecting, by the user, a quality of service policy using the orchestrator module, wherein the quality of service policy comprises computing resource's characteristics;
6. requesting, by the user, the reservation and configuration of a computing resource with the created virtual network interface card and the selected quality of service policy;
7. selecting a computing resource for the user from a list of allocated computing resources based on a predetermined set of rules, including compliance with the computing resource's characteristics specified by the user's selected Quality of Service Policy;
8. configuring the physical ports of the selected computing resource and creating a port aggregation, wherein the port aggregation is a virtual object comprising a physical port, the virtual network interface card, and the quality of service policy; and
9. notifying the user that the computing resource has been reserved and configured with the desired characteristics, including providing an identifier of the reservation, which allows for updates or release of the reservation.

According to another aspect, the present technology relates to a computer-implemented system configured to perform the method according to the present technology.

According to another aspect, the present technology relates to a non-transitory computer readable medium comprising instructions which upon being executed by a processor causes execution of the method according to the present technology.

Before providing below a detailed review of embodiments of the technology, some optional characteristics that may be used in association or alternatively will be listed hereinafter:
According to an example, the present technology further comprises a workflow sub-module configured to determine the predetermined order.

According to an example, the orchestrator module is further configured to check that the user is registered into an authorized list of users.

According to an example, the data synchronization sub-module is configured to populate the inventory of computing resources with the computing resource of the physical infrastructure.

According to an example, the data synchronization sub-module is configured to synchronize the components of the physical infrastructure with other components.

According to an example, the present technology further comprises a proxy module configured to present to the user the architecture of the physical infrastructure.

According to an example, the computing resource comprises a server.

According to an example, the inventory manager module is further configured to receive data from the synchronization sub-module.

According to an example, the inventory manager module is further configured to receive request from the computing resource manager module.

According to an example, the present technology further comprises, before the step of receiving a request from the user, a step of maintaining an inventory of computing resources, wherein each computing resource is uniquely identified.

According to an example, the present technology further comprises, after the step of creating the requested network object, a step of confirming the creation of the requested network object with an acknowledgement.

According to an example, the present technology further comprises, after the step of requesting, by the user, the reservation and configuration of a computing resource, a step of requesting the list of computing resources allocated to the user.

According to an example, the present technology further comprises, after the step of requesting the list of computing resources allocated to the user, a step of receiving the list of computing resources.

According to an example, the present technology further comprises, before the step of configuring the physical ports of the selected computing resource, a step of requesting the physical ports of the selected computing resource.

According to an example, the present technology further comprises, after the step of requesting the physical ports of the selected computing resource, a step of receiving the physical ports of the selected computing resource.

According to an example, the present technology further comprises, before the step of notifying the user that the computing resource has been reserved, a step of requesting information on a Top of the Rack switch associated with the selected computing resource.

According to an example, the present technology further comprises, after the step of requesting information on a top of the rack switch associated with the selected computing resource, a step of receiving the requested Top of the Rack information.

According to an example, the present technology further comprises, before the step of receiving a request from a user, a step of allocating, by the user, a plurality of internet protocol addresses.

According to an example, the present technology further comprises, after the step of allocating a plurality of internet protocol addresses, a step of selecting an internet protocol address among the plurality of internet protocol addresses to assign it to the computing resource to be reserved.

According to an example, the present technology further comprises, before the step of receiving a request from the user, the following steps:
1. receiving an initial request by the user for the creation of an internet protocol object, wherein the internet protocol object is configured to reference the selected internet protocol address;
2. creating the internet protocol object.

According to an example, the present technology further comprises, after the step of creating the internet protocol object, a step of confirming the creation of the internet protocol object.

According to an example, the virtual network interface card is associated with the internet protocol object.

According to an example, the port aggregation further comprises the internet protocol object.

According to an example, the present technology further comprises, after the step of creating the requested network object, a step of receiving a request from the user to create an another virtual network interface card, wherein the another virtual network interface card is associated with the network object.

According to an example, the port aggregation further comprises the network object.

According to an example, the step of selecting the Quality of Service Policy by the user comprises a step of creating, by the user, at least partially the quality of service policy.

According to an example, the present technology further comprises, after the step of confirming the creation of the requested network object to the orchestrator module, a step of confirming, by the orchestrator module, the successful creation of the network object to the user.

### Brief description of the drawings

For a better understanding of the present technology, as well as other aspects and further features thereof, reference is made to the following description which is to be used in conjunction with the accompanying drawings, where:
FIG. 1: Figure 1 illustrates a computer system for manipulating a component of a physical infrastructure, according to an embodiment of the present .technology.
FIG. 2: Figure 2 illustrates a physical infrastructure, according to an embodiment of the present .technology.
FIG. 3: Figure 3 illustrates schematically the steps of a computer-implemented method for manipulating a component of a physical infrastructure, according to an embodiment of the present technology.
FIG. 4: Figure 4 illustrates the sequential steps of a computer-implemented method for manipulating a component of a physical infrastructure, according to an embodiment of the present technology.
FIG. 5: Figure 5 illustrates a computer system configured to execute a action on a component of a physical infrastructure, according to an embodiment of the present .technology.

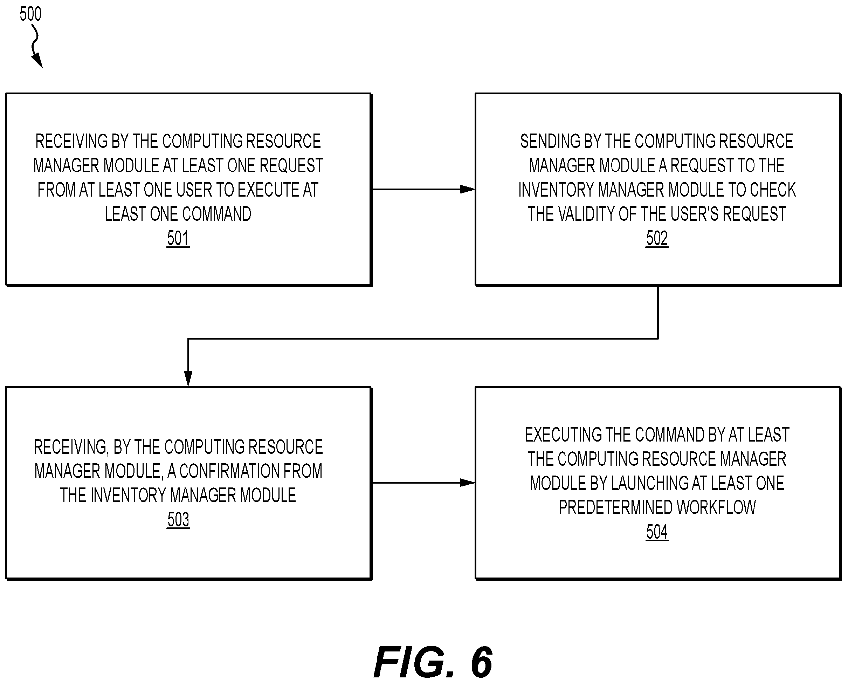

FIG. 6: Figure 6 illustrates the sequential steps of a computer-implemented method executing a action on a component of a physical infrastructure, according to an embodiment of the present technology.
FIG. 7: Figure 7 illustrates a computer system, according to the present technology.
FIG. 8: Figure 8 illustrates a schematical view of a nominal consumption by a product unit of a physical infrastructure, according to an embodiment of the present technology.
FIG. 9: Figure 9 illustrates a security model by a structuring tenant definition, according to an embodiment of the present technology.
FIG. 10: Figure 10 illustrates a regionalized deployment model, according to an embodiment of the present technology.
FIG. 11: Figure 11 illustrates a synchronization scheme, according to an embodiment of the present technology.
FIG. 12: Figure 12 illustrates a flowchart of a synchronization process, according to an embodiment of the present technology.

### Detailed description

The examples and conditional language recited herein are principally intended to aid the reader in understanding the principles of the present technology and not to limit its scope to such specifically recited examples and conditions. It will be appreciated that those skilled in the art may devise various arrangements which, although not explicitly described or shown herein, nonetheless embody the principles of the present technology and are included within its spirit and scope.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the present technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

In the context of the present technology, a server refers to a computing resource or computer system or a specialised hardware device that provides services and resources over a network to other computers, devices, or users. Servers are typically equipped with robust processing power, large memory capacity, and extensive storage capabilities to handle intensive computational tasks and manage vast amounts of data. They run dedicated software, such as web servers, database servers, file servers, or application servers, to deliver specific functionalities and services to clients upon request. The client devices access these resources through standard communication protocols like HTTP, FTP, or TCP/IP.

In the context of this technology, a switch is a networking device that forwards and filters data packets between devices connected to it. It uses packet switching to receive, process, and forward data to other devices on the network based on their MAC or IP addresses. Switches are essential components in building and managing computer networks, enabling efficient communication between different devices within a data centre infrastructure.

The functions of the various elements shown in the figures, including any functional block labeled as a "processor", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. In some embodiments of the present technology, the processor may be a general purpose processor, such as a central processing unit (CPU) or a processor dedicated to a specific purpose, such as a digital signal processor (DSP). Moreover, explicit use of the term a "processor" should not be construed to refer exclusively to hardware capable of executing software, and may implicitly include, without limitation, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown. Moreover, it should be understood that module may include for example, but without being limitative, computer program logic, computer program instructions, software, stack, firmware, hardware circuitry or a combination thereof which provides the required capabilities.

With these fundamentals in place, we will now consider some non-limiting examples to illustrate various implementations of aspects of the present technology.

According to an embodiment, the present technology represents a transformative approach to the management and consumption of physical infrastructure within a cloud environment. It aims to streamline the interaction between product units and the underlying hardware resources, facilitating a more efficient and flexible infrastructure management system.

According to an embodiment, the present technology is configured to serve as a control plane that abstracts the complexities of physical infrastructure, allowing product units to interact with hardware resources through a unified application programming interface, also called API. An API, as well known by the skilled person in the art, is a set of rules and protocols that allows different software applications, or modules and sub-modules, to communicate with each other. APIs define the methods and data formats that applications can use to request and exchange information, enabling integration and functionality across various systems and services.

According to an embodiment, the present technology is configured to replace traditional bare metal consumption methods, which often limit flexibility and scalability. By leveraging an internal API. Advantageously, the present technology exposes agnostic and abstract primitives that enable product units to manage physical assets without direct dependency on legacy systems.

According to an embodiment, managing or manipulating a physical asset or resource of a physical infrastructure may refer to consuming such asset or resource, for example by a user using it.

According to an embodiment, the present technology can be part of an architecture structured around several layers, each serving a distinct purpose:
- A plate level: This is the highest level of abstraction, grouping regions that share similar regulatory and administrative constraints.
- A region level: Each region consists of multiple availability zones, which are designed to be fault domains. This structure ensures that outages in one zone do not affect others.
- An availability zone level: Each availability zone contains the physical resources that can be managed through the present technology.

As described hereafter, the present technology represents a significant advancement in the management of physical infrastructure, in particular within cloud environments. By providing a unified control plane and abstracting the complexities of hardware management, it enables organizations to optimize their resource consumption and enhance operational efficiency. As the project continues to evolve, addressing the inherent challenges will be crucial to its success and adoption across various product units.

According to an embodiment, the technology relates to a computer system designed for the manipulation and/or management of physical infrastructure components. This system can facilitate the orchestration of various components, including computing resources, networks, and storage units, preferably based on user requests. The architecture of the system is structured to provide a seamless interface for users to interact with the underlying infrastructure, thereby abstracting the complexities associated with physical resource management.

According to an embodiment, the present technology may include an orchestrator module that receives user requests and advantageously transforms them into actionable sub-requests. This orchestrator module can execute these sub-requests in a predetermined order, ensuring that the physical infrastructure is configured to meet the desired final state specified by the user, thanks, for example, to a workflow sub-module. The orchestrator module can communicate with multiple modules, enabling efficient coordination and execution of tasks across the infrastructure.

According to an embodiment, the present technology may incorporate a computing resource manager module that is responsible for manipulating computing resources based on the orchestrator's directives. This computing resource manager module can manage the lifecycle of computing resources, including booting processes and resource allocation, thereby enhancing the overall efficiency of the infrastructure management process.

According to an embodiment, the present technology can also feature a data synchronization sub-module that ensures the inventory of computing resources is consistently updated. This data synchronization sub-module may synchronize data between the physical infrastructure and the system's internal databases, allowing for real-time visibility and management of available resources.

According to an embodiment, the present technology may further include a proxy module that exposes an API architecture to external users. This data synchronization can facilitate interactions with the system from outside the control plane, allowing for greater flexibility and accessibility in managing infrastructure resources.

According to an embodiment, the present technology is applicable in various fields, including cloud computing, data center management, and enterprise IT infrastructure. It can provide organizations with a robust framework for efficiently managing their physical resources while minimizing operational complexities and enhancing user experience.

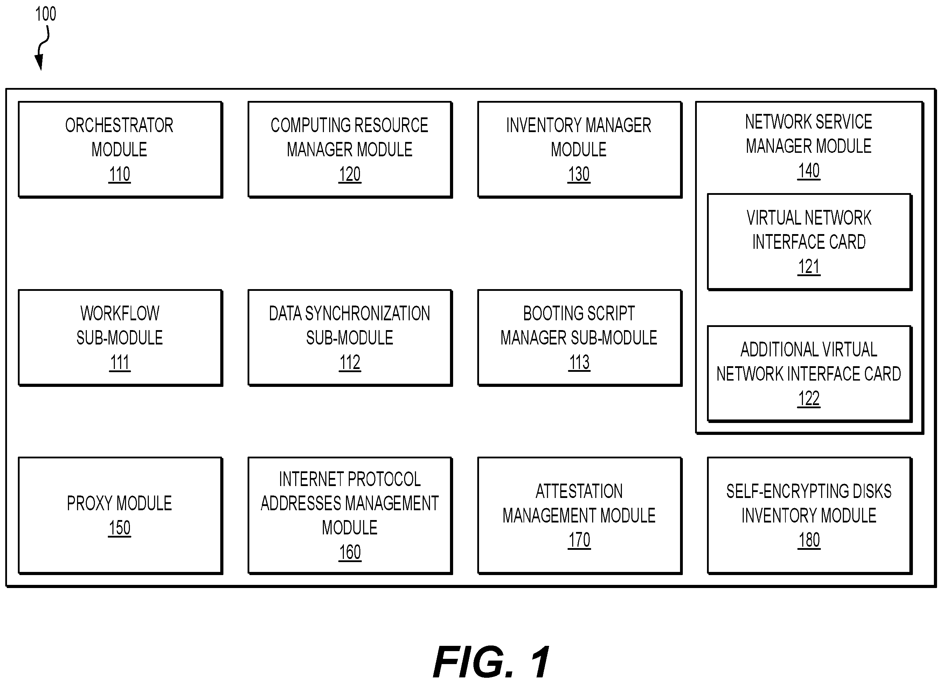

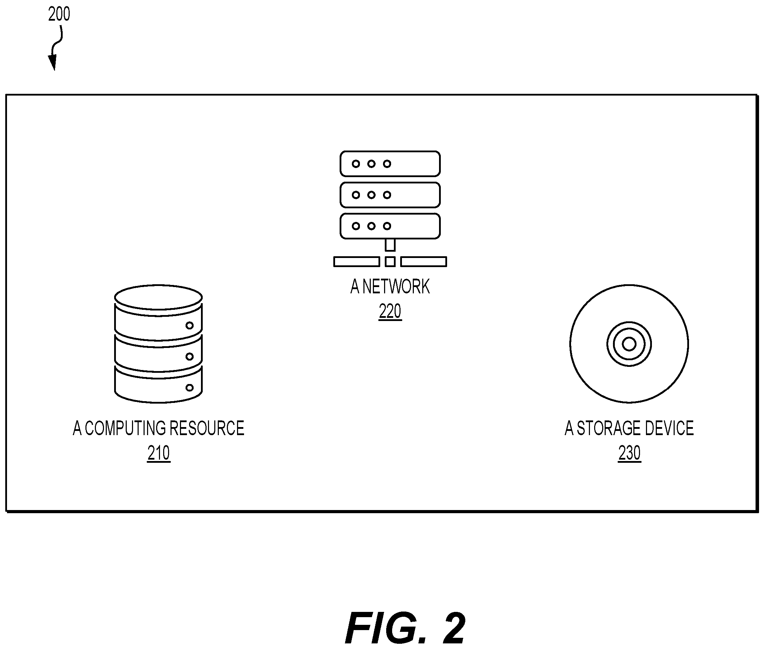

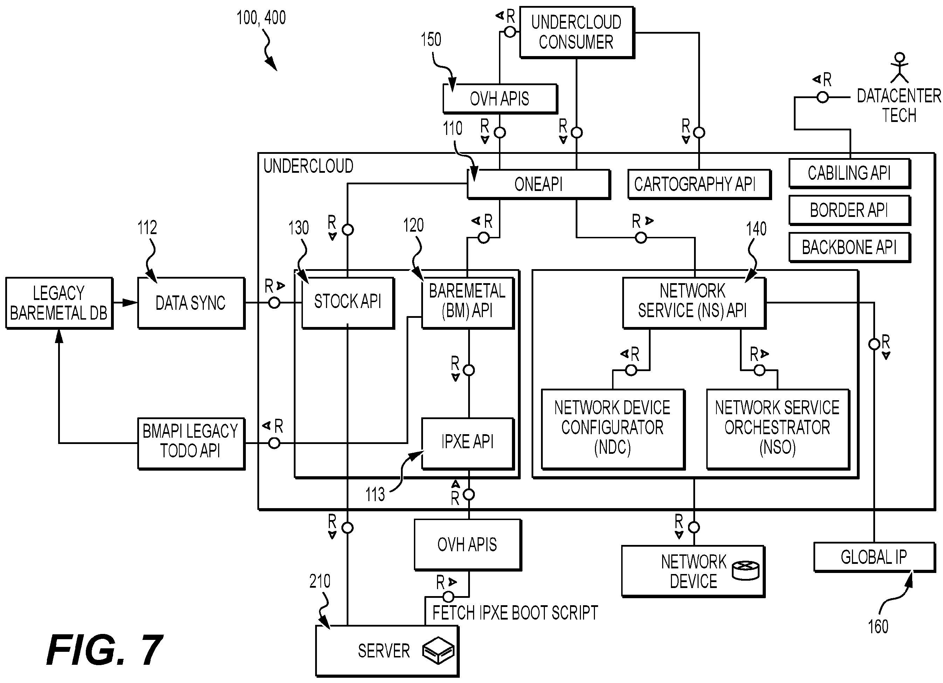

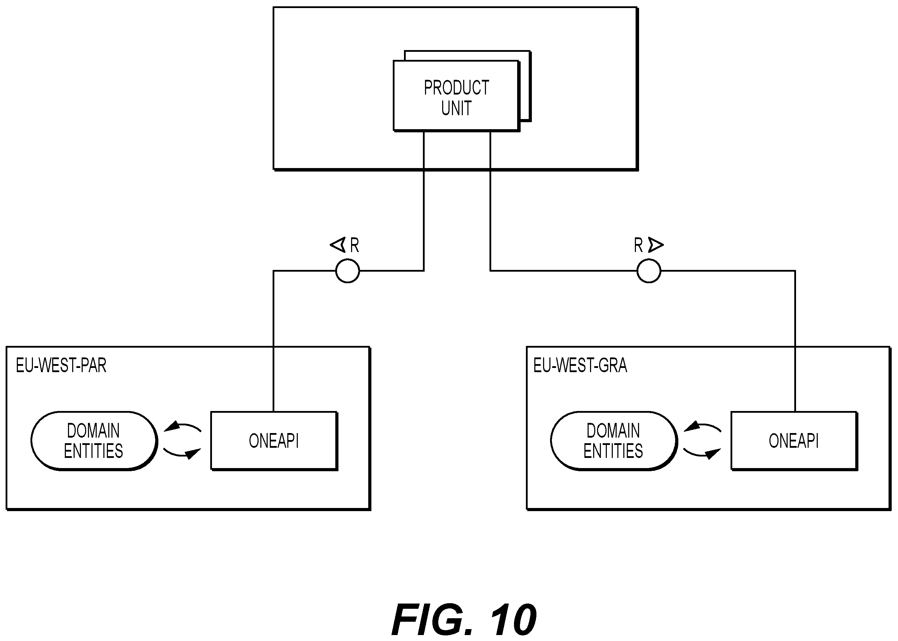

In more detail, as illustrated by Figures 1, 2, 7 to 10, and according to an embodiment, the present technology relates to a computer system 100 configured to manage a component of a physical infrastructure 200, preferably based on a user's request. The physical infrastructure 200 can comprise a plurality of components, including, for example, a computing resource 210, like a server for example, a network 220, and a storage device 230. This system 100 is advantageously configured to facilitate the efficient management and configuration of these components in response to user-defined requirements.

According to an embodiment, the orchestrator module 110 is configured to receive a request from a user. Preferably, the request comprises a descriptive model of a desired or predetermined final state of the physical infrastructure 200. This request is advantageously structured to be transformed into a set of sub-requests, which can be used to configure and/or manage the components of the physical infrastructure 200 to achieve the predetermined final state. The orchestrator module 110 executes each sub-request in a desired or predetermined order, which is determined, preferably, based on the descriptive model provided in the user's request.

According to an embodiment, the orchestrator module 110 utilizes a workflow sub-module 111 to ascertain the predetermined order of execution for the sub-requests. This workflow sub-module 111 can analyze dependencies and priorities among the requests to ensure that the configuration process is efficient and logical. The orchestrator module 110 can also be configured to communicate with a plurality of modules and/or sub-modules, facilitating coordination among different components of the system.

According to an embodiment, the orchestrator module 110 is configured to act as an orchestrator for various infrastructure-related APIs. Preferably, the orchestrator module 110 is configured to streamline the consumption of physical infrastructure resources by providing a unified entry point for product units to interact with the underlying systems.

As described hereafter, upon receiving a request from a user, the orchestrator module 110 orchestrates the necessary calls to multiple APIs, i.e. modules and/or sub-modules, including the computing resource manager module 120, also called Bare Metal API, and the network service manager module 140, also called a Network Service API, to fulfill the user's requirements.

Preferably, the orchestrator module 110 operates asynchronously, meaning that when a client submits a request, it receives a task identifier to track the status of the operation, which is processed in the background.

As described hereafter, the present technology maintains an inventory of computing resources, ensuring that only reserved servers are stored, while the available servers are managed through the data synchronization sub-module 112. This architecture allows for efficient resource management and minimizes the complexity faced by users, as they interact with abstracted primitives rather than the intricacies of the underlying infrastructure.

Furthermore, the orchestrator module 110 is secured through a micro-service gateway, which enforces authentication and authorization checks, ensuring that only registered users can access specific routes and perform actions on the infrastructure. This layered security model enhances the overall integrity of the present technology while facilitating seamless interactions between internal users and the infrastructure.

According to an embodiment, the present technology comprises a security model configured to ensure that all interactions with the orchestrator module 110 are authenticated and authorized. Each request to the orchestrator module 110 is preferably secured by the micro-service gateway, which verifies the identity of the client using a token-based system. This token grants access to specific routes and actions based on predefined Access Control Lists.

Preferably, the present technology incorporates a multi-layered approach, where both authentication and authorization checks are performed at different levels, ensuring that only authorized users can manage resources. Additionally, the present technology can be configured to support a "friend" relationship between tenants, allowing for controlled resource sharing while maintaining strict access controls.

Indeed, according to an embodiment, the present technology can be configured to implement a predetermined tenancy model. Preferably, this tenancy model is based on a pool model strategy, where resources are isolated among different tenants. Each tenant is represented by a unique token ID, which governs access to resources and actions within the physical infrastructure. The model allows for a hierarchical structure where tenants can have "friend" relationships, enabling resource sharing under specific conditions. Advantageously, the present technology ensures that each tenant's data is stored in separate tables indexed by their identifiers, maintaining data integrity and isolation.

According to an embodiment, from the orchestrator module 110 perspective, a tenant or user is defined not as an organization or team, but rather as the identity of the caller, which is represented by the micro-service gateway token ID. For example, a single product unit may have multiple automata interacting with the orchestrator module 110, with each automaton possessing its own token ID; consequently, from the orchestrator module 110 viewpoint, the entities associated with these automata, such as servers and networks, are considered to belong to different tenants.

According to an embodiment, the computing resource manager module 120 is configured to receive a sub-request from the orchestrator module 110. This computing resource manager module 120 can be configured to manage a computing resource 210 of the physical infrastructure 200. The computing resource 210 is preferably listed in a list of computing resources, which is provided by a data synchronization sub-module 112. Preferably, a computing resource comprises a server.

The computing resource manager module 120 can also be configured to send a booting script for a given computing resource 210 to a booting script manager sub-module 113. This booting script is then used for enabling the given computing resource 210 to boot through a network 220, thereby facilitating remote management and configuration.

According to an embodiment, the inventory manager module 130 is configured to receive sub-requests from the orchestrator module 110 to check the inventory of computing resources. This inventory contains advantageously data about a plurality of computing resources, allowing for effective tracking and management. The inventory manager module 130 is preferably configured to send relevant data back to the orchestrator module 110 as per the sub-requests it receives. Additionally, the inventory manager module 130 can manage the inventory of computing resources, receive data from the synchronization sub-module 112, and process requests from the computing resource manager module 120. Preferably, the inventory manager module 130 is configured to send the necessary data to the computing resource manager module 120 to execute specific commands.

According to an embodiment, the network service manager module 140 is configured to receive a sub-request from the orchestrator module 110. This network service manager module 140 can be configured to manage a network resource of the physical infrastructure 200, specifically physical ports. It can, for example, operate similarly to the computing resource manager module 120, also called the Bare Metal API (BMAPI) but focuses on network resources rather than computing resources. The network service manager module 140 utilizes preferably components such as the Network Service Orchestrator (NSO) to manage network devices and software gateways effectively.

In summary, the computer system 100 integrates multiple modules that work collaboratively to manage and/or manage the components of a physical infrastructure 200 based on user requests. Each module has specific functionalities and interconnections that facilitate the overall operation of the system, ensuring that user-defined configurations are executed efficiently and accurately.

According to an embodiment, the orchestrator module 110 can be configured to enhance security by verifying user authorization. This feature ensures that only registered users can submit requests to manage components of the physical infrastructure 200. By implementing this check, the present technology can prevent unauthorized access, thereby safeguarding sensitive operations and data.

According to an embodiment, the authorized list of users may be dynamically managed. This allows for the addition or removal of users based on changing organizational needs. Such flexibility can facilitate efficient user management and ensure that access control remains aligned with current operational requirements.

According to an embodiment, the verification process can be integrated seamlessly into the request handling workflow of the orchestrator module 110. This integration may streamline operations by ensuring that user authorization is checked before any further processing of requests occurs. Consequently, this can reduce the risk of processing invalid or malicious requests, enhancing the overall integrity of the system.

According to an embodiment, the data synchronization sub-module 112 is configured to populate the inventory of computing resources. This feature ensures that the inventory remains up-to-date with the latest information regarding available computing resources 210 within the physical infrastructure 200. By maintaining an accurate inventory, the system can facilitate efficient resource management and allocation.

According to an embodiment, the data synchronization sub-module 112 may utilize automated processes to gather and update data from various components of the physical infrastructure 200. This automation can reduce the likelihood of human error and enhance the speed at which the inventory is updated. Consequently, users can access real-time information about resource availability, which can improve decision-making and operational efficiency.

According to an embodiment, the synchronization process may involve continuous monitoring of the physical infrastructure 200 to detect changes in the status of computing resources 210, for example. This capability allows the present technology to promptly reflect any additions, removals, or modifications in the inventory. As a result, users can rely on the inventory to provide accurate and current data, which is useful for effective resource planning and utilization.

According to an embodiment, the data synchronization sub-module 112 can facilitate integration with other modules within the system. By ensuring that the inventory is consistently populated with accurate data, it can enhance the overall functionality of the orchestrator module 110 and other management components. This interconnectedness can lead to improved coordination among various system functions, ultimately resulting in a more streamlined and efficient infrastructure management process.

According to an embodiment, the data synchronization sub-module 112 can also enable seamless integration with external systems and components. This capability may facilitate the exchange of data and operational commands between the physical infrastructure 200 and other systems, such as cloud services or management platforms. Such integration can enhance the overall functionality of the infrastructure, allowing for more comprehensive management and control.

According to an embodiment, the synchronization feature may contribute to improved resource allocation and utilization within the physical infrastructure 200. By maintaining an accurate inventory of available resources, the system can optimize the deployment of computing resources, network devices, and storage solutions based on real-time demand. This dynamic resource management can lead to cost savings and enhanced performance.

According to an embodiment, the data synchronization sub-module (112) can also provide a robust framework for monitoring and auditing changes within the physical infrastructure 200. This feature may allow administrators or users to track modifications made to components, ensuring compliance with operational policies and standards. Enhanced visibility into the state of the infrastructure can facilitate better decision-making and risk management.

According to an embodiment, the present technology can comprise a proxy module 150 that serves as an intermediary between the user and the physical infrastructure 200. This proxy module 150 can facilitate user interactions by providing a clear representation of the underlying architecture. By abstracting the complexity of the physical components, the proxy module enhances user experience and accessibility.

According to an embodiment, the proxy module 150 may present the architecture in a user-friendly format, allowing users to visualize the relationships and configurations of various components within the physical infrastructure 200. This visualization can aid in understanding the system's layout and operational dynamics, which may improve decision-making processes.

According to an embodiment, the proxy module 150 can also enhance security by controlling access to the physical infrastructure 200. By serving as a controlled access point, it may limit direct interactions with sensitive components, thereby reducing the risk of unauthorized modifications or configurations.

According to an embodiment, the proxy module 150 may support various user roles and permissions, allowing for tailored access to infrastructure information. This feature can ensure that users only see the data relevant to their responsibilities, which can enhance operational efficiency and maintain data integrity.

According to an embodiment, the system may support various computing resources, i.e. server, types, including dedicated servers and appliances. This versatility can cater to diverse application requirements, providing users with tailored solutions that meet specific performance and resource needs.

According to an embodiment, the present technology relates to a computer-implemented method for manipulating a component of a physical infrastructure. This method is configured to be executed by a system as previously described.

According to an embodiment, the method incorporates a preliminary step where a user allocates a plurality of Internet Protocol (IP) addresses. This allocation is facilitated by an Internet Protocol addresses management module 160. The inclusion of this step enhances the overall efficiency of the system by ensuring that the necessary IP addresses are readily available for subsequent operations.

According to an embodiment, the allocation of IP addresses prior to receiving user requests allows for streamlined processing. By pre-allocating these addresses, the orchestrator module 110 can quickly assign them to computing resources as needed, thereby reducing latency and improving response times for user requests.

According to an embodiment, the Internet Protocol addresses management module 160 may provide a centralized interface for managing IP addresses. This centralization can simplify the process of tracking and allocating addresses, minimizing the risk of conflicts and ensuring that resources are utilized effectively.

According to an embodiment, the method may enhance network configuration flexibility. By allowing users to allocate multiple IP addresses in advance, the system can accommodate various networking scenarios, such as the creation of virtual network interface cards or the establishment of complex network topologies.

According to an embodiment, this approach can also improve resource management. By integrating IP address allocation into the workflow, the system can maintain an organized inventory of available addresses, facilitating better planning and allocation strategies for future network expansions or modifications.

According to an embodiment, the method may further comprise a step of selecting a IP address from the allocated plurality. The selection of an IP address can improve the efficiency of network operations. By allowing for the dynamic assignment of IP addresses, the method can reduce the likelihood of address conflicts and enhance overall network performance. This can lead to more reliable connectivity for the computing resources being reserved.

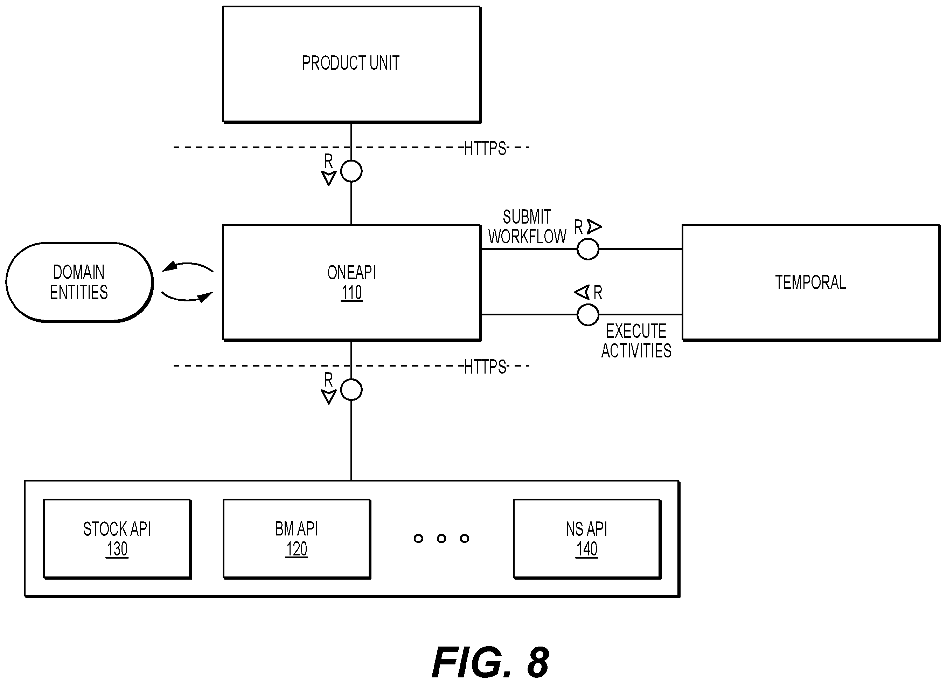

According to an embodiment, figure 8 illustrates a consumption by a product unit or user of the physical infrastructure using the previously described orchestrator module 110, as well as the computing resource manager module 120, the inventory management module 130 and network service manager module 140.

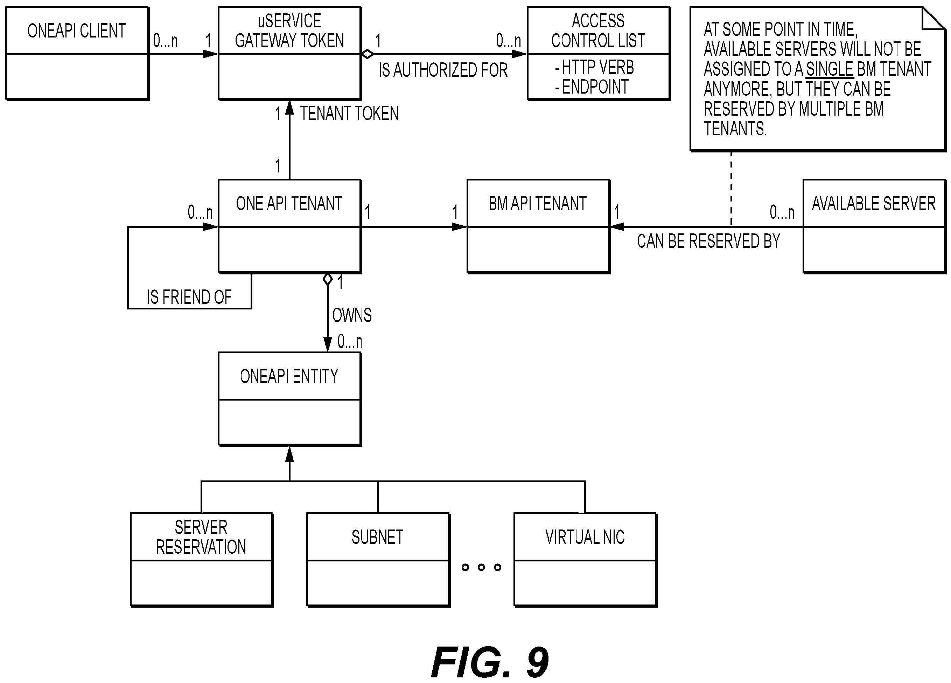

According to an embodiment, figure 9 illustrates an example of security model by a structuring tenant definition using the orchestrator module 110 and the computing resource manager module 120.

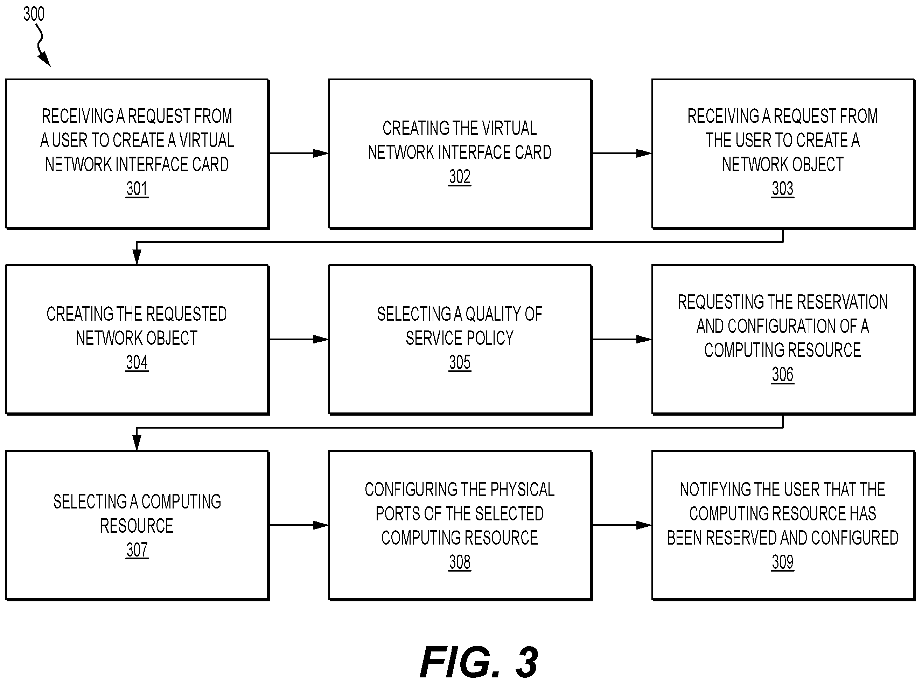

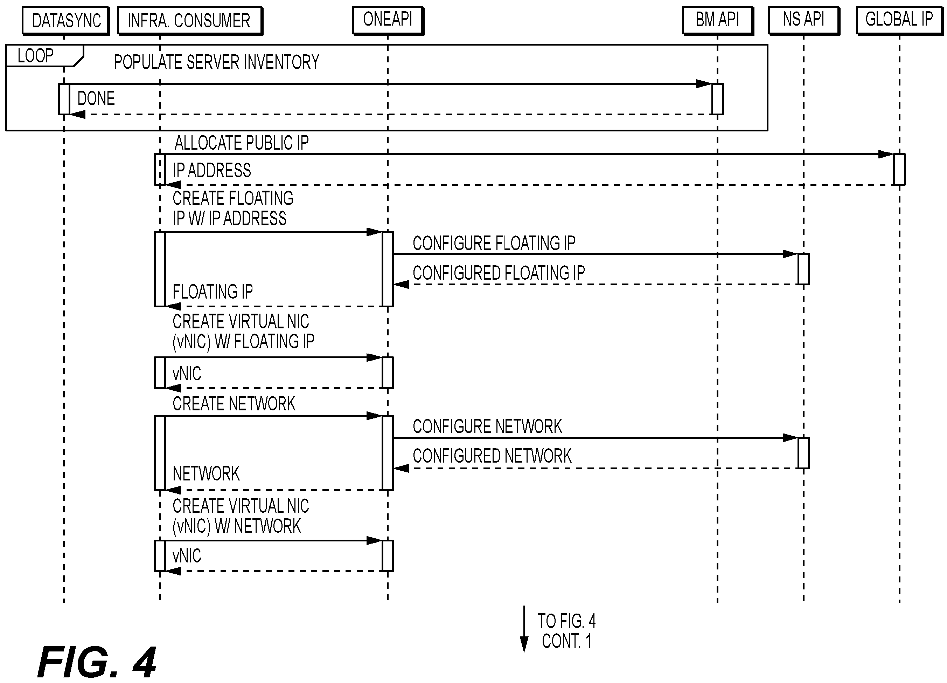

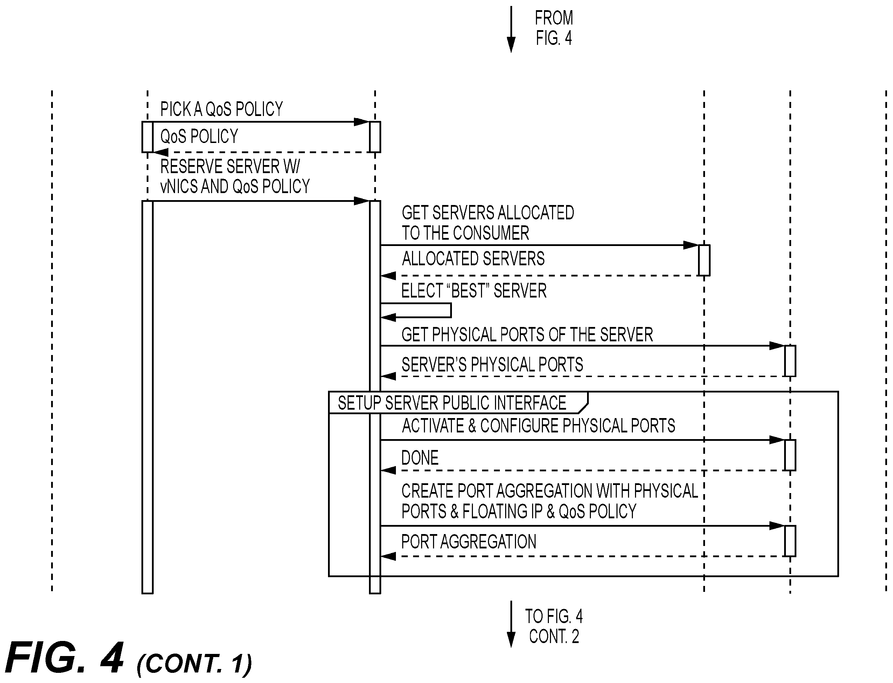

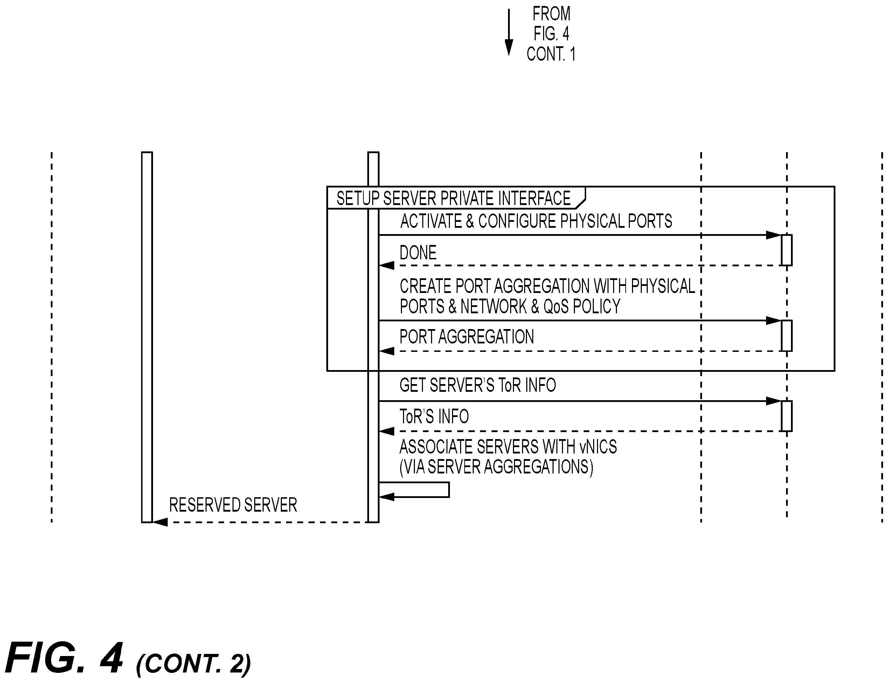

According to an embodiment and as illustrated by figures 3 and 4, the method comprises:
- Maintaining an inventory of computing resources within the computing resource manager module 120 using the data synchronization sub-module 112, wherein, preferably, each computing resource 210, i.e. server is uniquely identified;
- Receiving 301, by the orchestrator module 110, a request from a user to create a virtual network interface card (vNIC) 121, wherein preferably a virtual network interface card 121 is defined as an object describing connectivity on a dedicated computing resource 210;
- Creating 302 the virtual network interface card 121;
- Receiving 303, by the orchestrator module 110, a request from the user for the creation of a network object. Preferably, the network object completes the modeling of a computing resource's connectivity, enabling the attachment of the virtual network interface card 121 to a virtual rack;
- Instructing, by the orchestrator module 110, the network service manager module 140, to create the requested network object;
- Creating 304, by the network service manager module 140, the requested network object and confirming the creation of the requested network object to the orchestrator module 110 with an acknowledgement;
- Selecting 305, by the user, a Quality of Service (QoS) Policy using the orchestrator module 110, wherein the Quality of Service Policy comprises, for example, computing resource's characteristics;
- Requesting 306, by the user, to the orchestrator module 110, the reservation and/or configuration of a computing resource 210 with the created virtual network interface card 121 and the selected Quality of Service Policy;
- Requesting, by the orchestrator module 110 to the computing resource manager module 120, a list of computing resources allocated to the user;
- Returning, by the computing resource manager module 120 to the orchestrator module 110, a list of computing resources provisioned by the data synchronization sub-module 112;
- Selecting 307, by the orchestrator module 110, a computing resource 210 for the user from the list of allocated computing resources based on a predetermined set of rules, such as minimum number of cores, quantity of RAM within a given range, oldest server first, etc ... ;
- Requesting, by the orchestrator module 110 to the network service manager module 140, the physical ports of the selected computing resource 210;
- Returning, by the network service manager module 140 to the orchestrator module 110, the physical ports of the selected computing resource 210;
- Instructing 308, by the orchestrator module 110, the network service manager module 140 to configure the physical ports of the selected computing resource 210 and to create a port aggregation, wherein the port aggregation is a virtual object comprising a physical port, the virtual network interface card virtual network interface card 121 121, and the Quality of Service Policy;
- Requesting, by the orchestrator module 110, information on a Top of the Rack ToR switch associated with the selected computing resource 210 from the network service manager module 140;
- Receiving, by the orchestrator module 110 from the network service manager module 140, the requested Top of the Rack information;
- Notifying 309, by the orchestrator module 110, the user that the computing resource 210 has been reserved and configured with the desired characteristics, including providing an identifier (ID) of the reservation, which allows for updates or release of the reservation.

According to an embodiment, the orchestrator module 110 is configured to receive a initial request from the user for the creation of an internet protocol object. This step allows the user to specify their requirements for the internet protocol object, ensuring that the system can tailor the object to meet specific connectivity needs.

According to an embodiment, the orchestrator module 110 is configured to instruct the network service manager module 140 to create the internet protocol object.

According to an embodiment, the network service manager module 140 is configured to create the internet protocol object. This process ensures that the object is generated according to the parameters set forth in the initial request.

According to an embodiment, the orchestrator module 110 is configured to receive confirmation from the network service manager module 140 that the internet protocol object has been created. This confirmation step provides a feedback loop, allowing the orchestrator module 110 to verify successful execution of the request and enabling it to proceed with subsequent operations based on the newly created internet protocol object. This enhances reliability and ensures that the system 100 maintains an accurate state of the resources.

According to an embodiment, the virtual network interface card 121 can be associated with the internet protocol object. This association allows for enhanced network management and configuration, enabling the virtual network interface card 121 to utilize specific IP addresses dynamically assigned to it.

According to an embodiment, this association may facilitate the automatic provisioning of network resources. When a user requests the creation of a virtual network interface card 121, the system can automatically reference the associated internet protocol object to assign the appropriate IP address. This reduces the potential for human error during configuration and ensures that the virtual network interface card 121 is operational without requiring manual intervention.

According to an embodiment, the present technology can support advanced networking features such as Quality of Service (QoS) policies. By associating the internet protocol object with the port aggregation, the method may enable the implementation of QoS measures that prioritize traffic based on specific criteria, thus optimizing network performance and user experience.

According to an embodiment, the method can further comprise a step of receiving, by the orchestrator module 110, a request from the user to create an additional virtual network interface card 122.

According to an embodiment, the additional virtual network interface card 122 is associated with the previously created network object. This association facilitates seamless integration within the existing network architecture, ensuring that the new virtual network interface card can leverage the configurations and properties of the network object, thereby enhancing operational efficiency.

According to an embodiment, the orchestrator module 110 can manage the lifecycle of the virtual network interface cards 121 and/or 122 effectively. This capability may include monitoring, updating, and decommissioning virtual network interface cards as needed, ensuring optimal resource utilization and performance within the physical infrastructure 200.

According to an embodiment, the method may incorporate a port aggregation that includes the network object. This integration allows for a more streamlined management of network resources, facilitating the attachment of multiple physical ports into a single logical entity.

According to an embodiment, the inclusion of the network object within the port aggregation can provide a unified interface for managing connectivity. This can reduce the complexity associated with handling individual ports, thereby minimizing the potential for configuration errors. The method may enable users to manage network resources more effectively, leading to improved operational performance.

According to an embodiment, the method may also support advanced monitoring and analytics capabilities. By consolidating network objects within the port aggregation, it can provide a comprehensive view of network performance metrics. This can assist in proactive management and troubleshooting, ultimately leading to increased reliability and uptime of network services.

According to an embodiment, the method allows the user to select or create a Quality of Service (QoS) Policy. By enabling user involvement in the selection or creation of the QoS policy, the method can be tailored to meet specific application requirements and user preferences.

According to an embodiment, the user may create at least a portion of the QoS policy, which can facilitate customization. This flexibility can lead to improved resource allocation and management, ensuring that the computing resources are utilized efficiently according to the user's operational needs.

According to an embodiment, the method may support dynamic adjustments to the QoS policy based on real-time feedback from the system. This adaptability can ensure that the computing resources continuously align with changing user demands and network conditions, thereby maintaining optimal performance levels.

According to an embodiment, the method may include a step where the orchestrator module 110 confirms the successful creation of the requested network object to the user. This feature enhances user experience by providing immediate feedback regarding the status of their request, thereby increasing user satisfaction and trust in the system.

According to an embodiment, this confirmation step can facilitate better communication between the system and the user.

According to another embodiment, the present technology relates to a computer system configured to execute a action on a component of the physical infrastructure based on a request from a user.

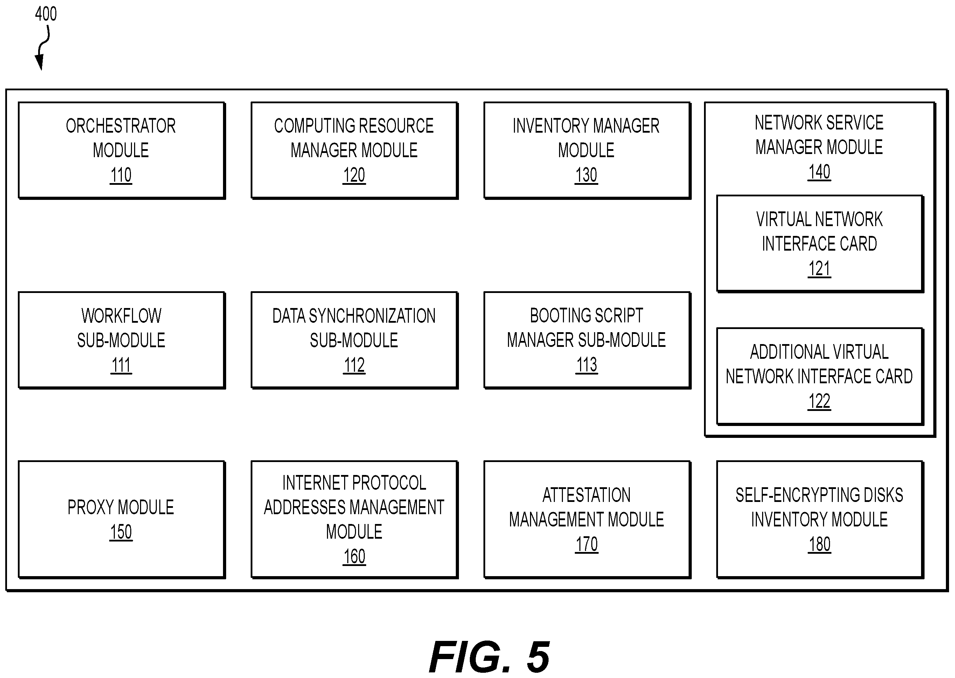

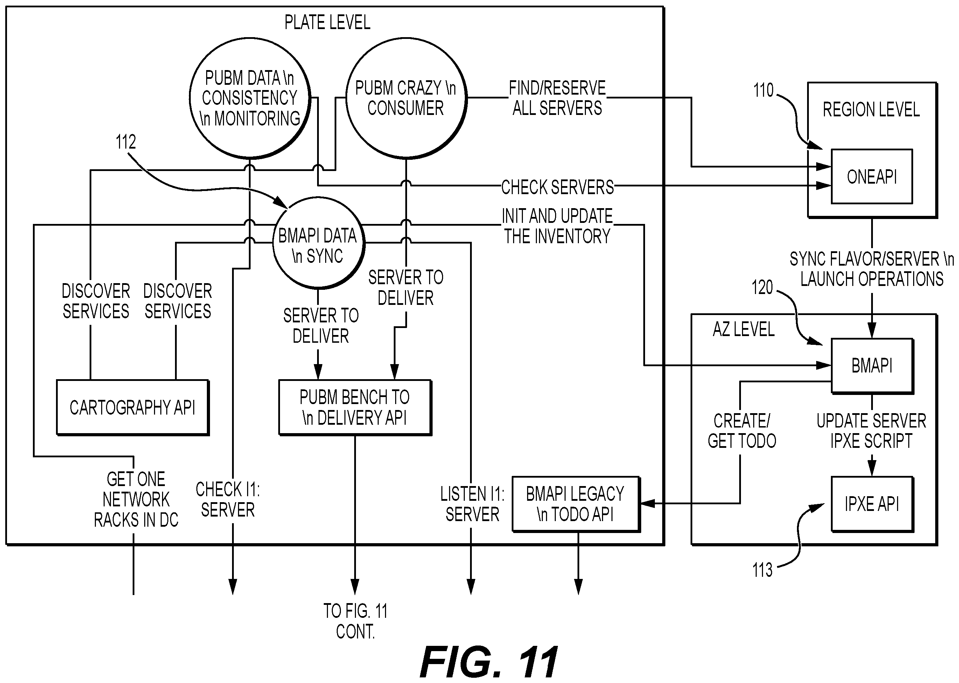

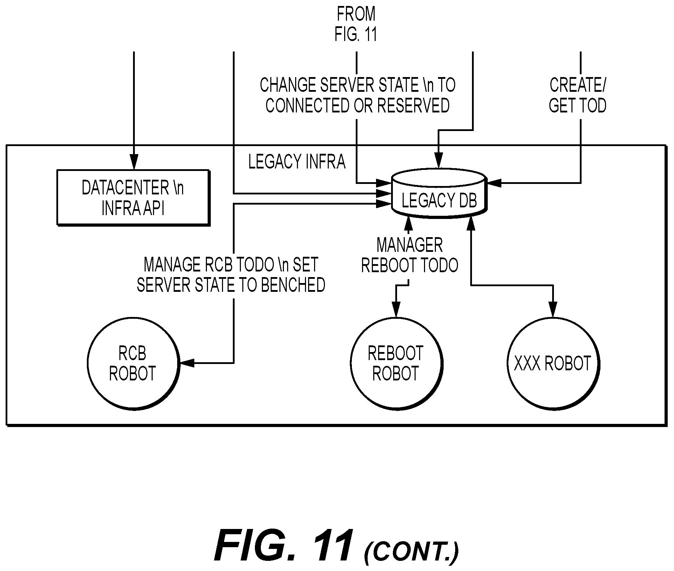

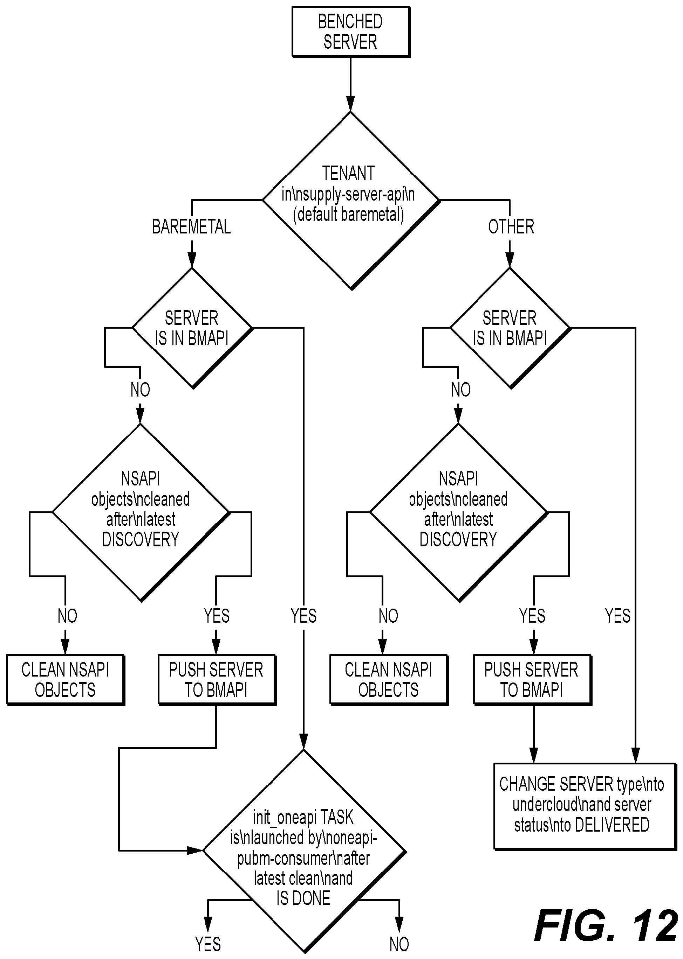

According to this embodiment, and as illustrated by Figures 5, 7, 11 and 12, the system 400 comprises:
- the computing resource manager module 120, as previously described, and configured to:
   i. Receive a request from a user, preferably through the orchestrator module 110;
   ii. Manage the computing resource 210 of the physical infrastructure 200, the computing resource 210 being listed into a list of computing resources, the list of computing resources being provided by the data synchronization sub-module 112;
   iii. Send a booting script for a given computing resource to the booting script manager sub-module 113, the booting script being configured to allow the given computing resource 210 to boot through a network;
   iv. Send a request to the inventory manager module 130;
   v. Receive data from the inventory manager module 130;
   vi. Execute a plurality of actions;
- The inventory manager module 130, as previously described, and configured to:
   i. Manage the inventory of computing resources of the physical infrastructure 200;
   ii. Receive data from the synchronization sub-module 112;
   iii. Receive request from the computing resource manager module 120;
   iv. Send data, preferably necessary data, to the computing resource manager module 120 to execute a command.

According to an embodiment, the computing resource manager module 120, also called the Bare Metal API (BMAPI), can comprise a sophisticated framework designed to facilitate the management and orchestration of bare metal servers within a cloud infrastructure. Preferably, the computing resource manager module 120 operates as a bridge between the present technology and the legacy Bare Metal control plane, ensuring seamless integration and functionality.

According to an embodiment, a robot or module refers to an automated software component designed to perform specific tasks within the system. These robots or modules interact with various APIs to execute operations such as reserving servers, managing network configurations, and updating server states. They facilitate the automation of workflows, ensuring efficient and consistent execution of actions without manual intervention. Examples include a robot to reserve and prepare bare metal servers, and another one to synchronize data between databases.

According to an embodiment, the computing resource manager module 120 can comprise several modules or sub-modules, also called robot, taken among at least:
- A primary interface configured to expose generic and abstract bare metal primitives. It provides HTTP routes for various operations, including server inventory management, factory resets, operating system installations, and server reboots. The primary interface can be configured to operate within multiple availability zones, ensuring resource availability and redundancy.

- Legacy Todo API: This module is configured to allow for the creation and retrieval of todo entries in the legacy database, enabling interaction with existing robots without requiring significant modifications.
- A cartography module: This module is configured to serve as a service registry, providing configuration and status information, such as endpoint URLs and migration statuses of availability zones.
- In the case of a robot as consumer, the consumer can be configured to automate the reservation and preparation of Bare Metal servers for delivery. It interacts with the orchestrator module 110 to identify unreserved servers, create necessary network objects, and update the server status to "connected" or "reserved." This streamlines the server provisioning process, ensuring that resources are efficiently allocated and ready for use.
- The data consistency monitoring module can be configured to ensure that all servers marked as "delivered" in the legacy database are also present in the orchestrator module database. Preferably, it triggers alerts when discrepancies are found, such as a delivered server not listed in the orchestrator module 110 or if a server remains in the "benched" status for an extended period.

According to an embodiment, the present technology employs a robust security model that comprises:
- Authentication and Authorization: Users must be authenticated and authorized to interact with the computing resource manager module 120. The present technology maintains an authorized list of users, ensuring that only those with the appropriate permissions can execute requests.
- Access Control Lists: The micro-service gateway enforces access control lists to control access to various components of the computing resource manager module 120, ensuring that users can only perform actions permitted by their roles. Preferably, the micro-service gateway is configured to control from a security point of view all the interactions of the different modules with each other;
- Data Integrity: The present technology comprises mechanisms to verify the integrity of data and operations, preventing unauthorized modifications and ensuring that all actions are logged and traceable.
- The data synchronization sub-module 112 is configured to facilitate the synchronization of data between the computing resource manager module 120 database and the legacy Bare Metal control plane databases. The data synchronization sub-module 112 is configured to ensure that the computing resource manager module 120 maintains an accurate and up-to-date inventory of computing resources, thereby promoting it as, for example, the single source of truth for all Bare Metal servers.

According to an embodiment, one of the primary functions of the data synchronization sub-module 112 is to initialize and periodically update the computing resource manager module 120 database with relevant data from the legacy system. This process involves executing a series of scheduled tasks, also called cron jobs, each tailored to specific synchronization needs. For instance, the SERVER_SYNC job is responsible for adding standard servers to the computing resource manager module 120 inventory, while the FLAVOR_SYNC job manages the addition of new flavors. The ASSET_SYNC job focuses on integrating asset servers, which are part of a predetermined control plane, for example not intended for customer consumption.

According to an embodiment, the SERVER_SYNC cronjob is a component of the data synchronization sub-module 112, responsible for maintaining the integrity and accuracy of the server inventory within the present technology. This job operates by adding standard servers to the computing resource manager module 120 inventory based on entries from a legacy database. As mentioned, the behavior of SERVER_SYNC is contingent upon the actinium migration status and the type of server being processed. For dedicated servers, if the computing resource manager module endpoint is not activated, the job updates the status of benched servers to either connected or reserved via a bench2delivery API, which is a specialized service responsible for managing the delivery state of servers within an infrastructure. It facilitates the transition of servers from a "benched" state to either "connected" or "reserved." This API can play a role in ensuring that servers are correctly updated in their delivery status, enabling efficient server management and deployment processes. Conversely, if the endpoint is active and the migration status is not started, it adds all servers in statuses such as connected, reserved, hacked, or delivered to the computing resource manager module 120 inventory while continuing to update benched servers. Preferably, when the migration is in progress, SERVER_SYNC refrains from making any changes. Advantageously, once the migration is complete, it adds all benched servers to the inventory after cleaning their associated network objects, ensuring that the server type and status are accurately reflected. This systematic approach ensures that the computing resource manager module 120 maintains a current and reliable inventory of servers, facilitating efficient resource management and allocation.

According to an embodiment, the ASSET_SYNC cronjob is tasked with the integration of asset servers into the computing resource manager module inventory, specifically focusing on servers that are part of a predetermined control plane and are not intended for customer consumption, for example. This job can operate independently, ensuring that any newly discovered servers from this specific control plane are promptly added to the computing resource manager module inventory.

According to an embodiment, the UPDATE_IPXE_URL cronjob is configured to manage the URL configuration for the scripts of the booting script manager sub-module 113 utilized by Bare Metal servers during the boot process, for example. Preferably, when the migration is in the "not started" phase, the job does not perform any updates. However, during the "doing" and "done" phases of the migration, UPDATE_IPXE_URL is configured to actively update the URL where servers look for their booting scripts, ensuring that the correct scripts are accessible for booting. This process is useful for maintaining the operational readiness of Bare Metal servers, as it allows for the dynamic delivery of boot scripts tailored to the specific needs of each server.

According to an embodiment, the UPDATE_IPXE_URL is configured to allow the update, for each server in the legacy system or database, of the URL from which each of its servers can retrieve its booting script.

In summary, the data synchronization sub-module 112 is configured to ensure that the present technology remains synchronized with a legacy infrastructure.

Advantageously, the computing resource manager module 120 represents a significant advancement in the management of bare metal servers within a cloud infrastructure. By abstracting the complexities of physical resource management and providing a robust framework for integration with legacy systems, the computing resource manager module 120 enables organizations to efficiently consume and manage their infrastructure resources.

According to an embodiment, the system 400 may be configured to perform a variety of power management tasks. These tasks can include rebooting computing resources, which allows for the refreshing of system states and the application of updates.

According to an embodiment, the system 400 can be configured to facilitate the installation of operating systems based on user preferences. This feature may lead to the partitioning of a disk of the computing resource, allowing for optimized storage management and tailored configurations. Such flexibility can improve resource utilization and meet specific user requirements.

According to an embodiment, the system 400 may be configured to provide the ability to open a remote console for debugging routines. This feature can enable administrators to troubleshoot issues in real-time, facilitating quicker resolutions and minimizing downtime. The remote access capability can enhance operational efficiency by allowing for immediate intervention without the need for physical presence.

According to an embodiment, the system 400 can also be configured to execute rescue tasks, which may comprise creating, loading, and/or updating rescue images. This functionality can ensure that a reliable recovery option is always available, thereby enhancing system resilience. The ability to update rescue images can keep recovery options current with the latest system configurations and security patches.

According to an embodiment, the system 400 may also be configured to allow maintenance on hardware components, whether scheduled or unscheduled. This can extend the lifespan of hardware, reduce the likelihood of failures, and ensure optimal performance. Regular maintenance can also lead to cost savings by preventing major repairs or replacements.

According to an embodiment, the system 400 can be configured to manage firmware security tasks, comprising updating firmware, for example. This capability can enhance the security posture of the computing resources by ensuring that all components are running the latest firmware versions, for example, which may contain critical security patches and performance improvements. Keeping firmware up to date can mitigate vulnerabilities and protect against potential threats.

According to an embodiment, the system 400 may further comprise a attestation management module 170 that is specifically configured to verify the integrity of the computing resource boot process. The attestation management module 170 can measure and analyze Platform Configuration Register (PCR) values, which are useful for establishing a secure boot environment. By assessing these values, the system 400 can ensure that the boot process has not been compromised.

According to an embodiment, the verification of PCR values can provide a robust mechanism for detecting unauthorized modifications or tampering during the booting sequence. This capability may enhance the overall security posture of the computing resources by ensuring that only trusted and verified components are loaded during the boot process.

According to an embodiment, the inclusion of the Attestation Management module 170 can contribute to a higher level of trust in the system's integrity. By continuously monitoring and validating the boot process, the system 400 can provide assurances to users and administrators that the computing resources are operating in a secure and reliable manner. This can be particularly advantageous in environments where security is paramount, such as in cloud computing or sensitive data processing applications.

According to an embodiment, the system 400 can further comprise a self-encrypting disks inventory module 180 configured to manage and/or track a plurality of self-encrypting drives (SEDs) within the physical infrastructure 200. This feature allows for centralized oversight of all SEDs, ensuring that each drive is accounted for and monitored throughout its lifecycle. The ability to manage multiple drives simultaneously can enhance operational efficiency and reduce the risk of data loss.

According to an embodiment, the self-encrypting disks inventory module 180 may store and manage Physical Security Identifiers (PSIDs) and associated secrets of SEDs. This capability ensures that critical security information is securely maintained and readily accessible when needed. By managing PSIDs, the system 400 is configured to facilitate the secure initialization and configuration of SEDs, thereby enhancing the overall security posture of the organization.

According to an embodiment, the integration of the Self-Encrypting Disks Inventory module can enable seamless and efficient native disk encryption management. This feature allows organizations and/or users to implement encryption policies consistently across all SEDs, ensuring compliance with data protection regulations. The streamlined management of encryption processes can reduce administrative overhead and improve the responsiveness of the organization to security threats.

According to another embodiment, the present technology relates to a computer-impelmented method for executing a action on a component of a physical infrastructure 200 based on a request from a user. Preferably, this method is configured to be executed by the system 400.

According to this embodiment, and as illustrated by figure 5, the method 500 comprises:
- Receiving 501 by the computing resource manager module 120 a request from a user to execute a command;
- Sending 502 by the computing resource manager module 120 a request to the inventory manager module 130 to check the validity of the user's request;
- When the inventory manager module 130 validate the user's request:
   ∘ Receiving 503 by the BMAPI a confirmation from the inventory manager module 130;
   ∘ Executing 504 the command by at least the computing resource manager module 120 by launching a predetermined workflow.

According to an embodiment, the method may include the installation of a new operating system on a computing resource. This feature allows for the flexibility to update or change the operating system as needed.

According to an embodiment, the installation process can be executed according to a predetermined partitioning scheme of a disk. This predetermined scheme can optimize the allocation of disk space. By defining specific partitions, the method 500 may facilitate better organization of data and applications, leading to improved system management.

According to an embodiment, the method 500 is configured to streamline the deployment process for new computing resources. By automating the installation of the operating system according to a predetermined scheme, the method 500 may reduce the time and effort required for manual installations, thereby increasing operational efficiency.

According to an embodiment, the predetermined workflow can comprises the following substeps:
- Rebooting the computing resource 210 in a rescue mode using a power management sub-module ; This feature can facilitate recovery operations by allowing the system to enter a state where critical diagnostics and repairs can be performed without interference from the primary operating system;
- Sending by the computing resource 210 to a booting script manager sub-module 113 a request for booting data; This capability may enhance the flexibility of the boot process by enabling the retrieval of specific boot configurations tailored to the needs of the computing resource;
- Receiving by the computing resource 210 from the booting script manager sub-module 113 booting data; This feature can ensure that the computing resource is equipped with the most appropriate and updated boot parameters, thereby improving the reliability and efficiency of the boot process;
- Sending by the computing resource manager module 120 to the inventory manager module 130 a request for information regarding the characteristics of the computing resource 210; This interaction may provide real-time insights into the resource's specifications, enabling informed decision-making during the installation process;
- Receiving by the computing resource manager module 120 from the inventory manager module 130 information regarding the characteristics of the computing resource 210; This feature can enhance the accuracy of resource management by ensuring that the computing resource manager module 120 has access to up-to-date data about the resource's capabilities and limitations;
- Connecting of the computing resource manager module 120 to the computing resource 210 to allow drive writing; This capability may facilitate direct modifications to the storage drives, enabling the installation of new software or updates as part of the operational workflow;
- Installing the new operating system to the computing resource 210 according to a predetermined partitioning scheme of a drive; This feature can optimize the use of storage resources by ensuring that the operating system is installed in a manner that aligns with the specific requirements of the computing environment.;
- Rebooting the computing resource 210 on the new operating system using the power management sub-module.

According to an embodiment, the method 500 may comprise updating a firmware of the computing resource 210. This feature ensures that the computing resource 210 operates with the latest firmware, which can enhance performance, security, and compatibility with other system components.

According to an embodiment, the method 500 may involve booting the computing resource 210 on a network. This capability allows for remote access to the firmware update process, facilitating updates without the need for physical access to the hardware. It can streamline maintenance operations and reduce downtime.

According to an embodiment, the computing resource manager module 120 can check for available firmware updates. This proactive monitoring feature ensures that the computing resource 210 remains up-to-date with the latest firmware versions, which can mitigate vulnerabilities and improve system stability.

According to an embodiment, when an update is available, the method 500 may be configured to update the firmware accordingly. This automated process is completely invisible for the user and can minimize the risk of human error during updates and ensure that the computing resource benefits from enhancements and fixes provided by the firmware developers.

According to an embodiment, the method 500 may comprise rebooting the computing resource on its operating system after the firmware update. This step allows the new firmware to take effect, ensuring that the computing resource operates optimally with the updated software.

Unless otherwise specified herein, or unless the context clearly dictates otherwise the term about modifying a numerical quantity means plus or minus ten percent. Unless otherwise specified, or unless the context dictates otherwise, between two numerical values is to be read as between and including the two numerical values.

In the present description, some specific details are included to provide an understanding of various disclosed implementations. The skilled person in the relevant art, however, will recognize that implementations may be practiced without one or more of these specific details, parts of a method, components, materials, etc.

In the present description and appended claims "a", "an", "one", or "another" applied to "embodiment", "example", or "implementation" is used in the sense that a particular referent feature, structure, or characteristic described in connection with the embodiment, example, or implementation is included in at least one embodiment, example, or implementation. Thus, phrases like "in one embodiment", "in an embodiment", or "another embodiment" are not necessarily all referring to the same embodiment. Furthermore, the particular features, structures, or characteristics may be combined in any suitable manner in one or more embodiments, examples, or implementations.

As used in this description and the appended claims, the singular forms of articles, such as "a", "an", and "the", may include plural referents unless the context mandates otherwise. Unless the context requires otherwise, throughout this description and appended claims, the word "comprise" and variations thereof, such as, "comprises" and "comprising" are to be interpreted in an open, inclusive sense, that is, as "including, but not limited to".

Modifications and improvements to the above-described implementations of the present technology may become apparent to those skilled in the art. The foregoing description is intended to be exemplary rather than limiting. The scope of the present technology is, therefore, intended to be limited solely by the scope of the appended claims.

## Claims

1. A computer-implemented system (100) configured to manage a component of a physical infrastructure (200), the physical infrastructure (200) comprising a plurality of components, the plurality of components comprising a computing resource (210), a network (220), a storage device (230), the system (100) comprising at least:
a. an orchestrator module (110) configured to:
i. receive a request from the user, the request comprising a descriptive model of a final state of the physical infrastructure (200);
ii. generate, based on the request, a set of sub-requests associated with instructions to configure a set of components of the physical infrastructure (200) to put the physical infrastructure (200) into the final state;
iii. execute the sub-requests of the set of sub-requests based on a predetermined order determined based on the descriptive model;
b. a computing resource manager module (120) configured to:
i. receive at least one sub-request of the set of sub-requests;
ii. manage a computing resource (210) of the physical infrastructure (200), the computing resource (210) being listed into a list of computing resources, the list of computing resources being accessible from a data synchronization sub-module (112);
iii. send a booting script for a given computing resource (210) to a booting script manager sub-module (113), the booting script being configured to allow the given computing resource (210) to boot through the network (220);
c. an inventory manager module (130) configured to:
i. receive at least one sub-request of the set of sub-requests to check an inventory of computing resources, the inventory comprising data about a plurality of computing resources;
ii. send data to the orchestrator module (110) according to at least one sub-request of the set of sub-requests;
iii. manage the inventory of computing resources;
iv. send data to the computing resource manager module (120) to execute a command;
d. a network service manager module (140) configured to :
i. receive at least one sub-request of the set of sub-requests; and
ii. manage a network resource of the physical infrastructure (200).

2. The system (100) according to the previous claim further comprising a workflow sub-module (111) configured to determine the predetermined order.

3. The system (100) according to any of the previous claims, wherein the orchestrator module (110) is further configured to check that the user is registered into an authorized list of users.

4. The system (100) according to any of the previous claims, wherein the data synchronization sub-module (112) is configured to populate the inventory of computing resources with the computing resource (210) of the physical infrastructure (200).

5. The system (100) according to any of the previous claims, wherein the data synchronization sub-module (112) is configured to synchronize the components of the physical infrastructure (200) with other components.

6. The system (100) according to any of the previous claims wherein the computing resource (210) comprises a server.

7. A computer-implemented method (300) for managing a component of a physical infrastructure (200) based on a user's request, the physical infrastructure (200) comprising a plurality of components, the plurality of components comprising a computing device (210), a network (220), a storage device (230), the method (300) comprising:
a. receiving (301) a request from the user to create a virtual network interface card (121), wherein the virtual network interface card (121) is defined as an object describing connectivity on a dedicated computing resource (210);
b. creating (302) the virtual network interface card (121);
c. receiving (303) a request from the user to create a network object, wherein the network object completes the modeling of a computing resource's connectivity, enabling the attachment of the virtual network interface card (121) to a virtual rack; .
d. creating (304) the requested network object;
e. selecting (305), by the user, a quality of service policy using the orchestrator module (110), wherein the quality of service policy comprises computing resource's characteristics;
f. requesting (306), by the user, the reservation and configuration of a computing resource (210) with the created virtual network interface card (121) and the selected quality of service policy;
g. selecting (307) a computing resource (210) for the user from a list of allocated computing resources based on a predetermined set of rules, including compliance with the computing resource's characteristics specified by the user's selected Quality of Service Policy;
h. configuring (308) the physical ports of the selected computing resource (210) and creating a port aggregation, wherein the port aggregation is a virtual object comprising a physical port, the virtual network interface card (121), and the quality of service policy; and
i. notifying (309) the user that the computing resource (210) has been reserved and configured with the desired characteristics, including providing an identifier of the reservation, which allows for updates or release of the reservation.

8. The method (300) according to the previous claim comprising, before the step of receiving (301) a request from the user, a step of maintaining an inventory of computing resources, wherein each computing resource (210) is uniquely identified.

9. The method (300) according to any of the two previous claims further comprising, after the step of requesting (306), by the user, the reservation and configuration of a computing resource (210), a step of requesting the list of computing resources allocated to the user, and further comprising, after the step of requesting the list of computing resources allocated to the user, a step of receiving the list of computing resources.

10. The method (300) according to any of the three previous claims further comprising, before the step of receiving a request from a user, a step of allocating, by the user, a plurality of internet protocol addresses, and further comprising, after the step of allocating a plurality of internet protocol addresses, a step of selecting an internet protocol address among the plurality of internet protocol addresses to assign it to the computing resource (210) to be reserved.

11. The method (300) according to the previous claim further comprising, before the step of receiving a request from the user, the following steps:
a. receiving an initial request by the user for the creation of an internet protocol object, wherein the internet protocol object is configured to reference the selected internet protocol address;
b. creating the internet protocol object.

12. The method (300) according to the previous claim wherein the virtual network interface card (121) is associated with the internet protocol object, and wherein the port aggregation further comprises the internet protocol object.

13. The method (300) according to any of the previous six previous claims further comprising, after the step of creating the requested network object, a step of receiving a request from the user to create an another virtual network interface card (122), wherein the another virtual network interface card (122) is associated with the network object, and wherein the port aggregation further comprises the network object.

14. The method (300) according to any of the seven previous claims wherein the step of selecting the quality of service policy by the user comprises a step of creating, by the user, at least partially the quality of service policy.

15. A non-transitory computer readable medium comprising instructions which upon being executed by a processor causes execution of the method according to any one of claims 7 to 14.
